# EUROPEAN PATENT APPLICATION

(11) **EP 4 838 819 A1**
(43) Date of publication of application: **11.11.2026**
(21) Application number: 25175088.1
(22) Date of filing: 08.05.2025
(51) Int. Cl.: H04L 5/00, H04W 4/70, H04W 68/00, H04W 74/08

(54) **INTERNET OF THINGS DEVICE AND METHOD**

(71) Applicant: Panasonic Intellectual Property Corporation of America, Torrance, CA 90504 (US)
(72) Inventor: DHANANJAYA, Harshith, 63225 Langen (DE); SUZUKI, Hidetoshi, Osaka, 571-8501 (JP); KUANG, Quan, 63225 Langen (DE); SHARIATMADARI, Hamidreza, 63225 Langen (DE)
(74) Representative: Grünecker Patent- und Rechtsanwälte PartG mbB

(57) **Abstract**

Provided is an Internet of Things, IoT, device, comprising a transceiver and circuitry. The transceiver, in operation, receives a paging message indicating resource information regarding one or more resources, wherein the one or more resources are grouped in one or more resource sets in respective time slots and/or frequency units, and an entirety of the one or more resources of the one or more resource sets forms a resource pool; and receives a trigger message indicating that a resource set, from among the one or more resource sets, is scheduled to be made available for transmission. The circuitry, in operation, randomly selects a first resource included in the resource pool as a resource for transmission of a paging response message; and controls the transceiver to transmit the paging response message in the first resource, if the first resource is included in the resource set corresponding to the trigger message.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The Internet of things (IoT) market is a major source of revenue for future wireless technology and is a steadily growing market. Building, commercial, health, agriculture, infrastructure, and industries are some of the key sectors targeted by the loT market. Energy harvesting technology is a key to the success of the loT market as it can considerably reduce device operational costs. Ambient loT devices (energy harvesting devices) harvest energy from natural or ambient sources, for example, electromagnetic, solar, thermal or mechanical (pressure, vibration) sources, and operate either with a small battery or without battery. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task, particularly, since A-loT devices lack RRC states and ARQ and HARQ transmission protocols that ensure reliable data delivery, A-loT devices have limited power available resulting in reduced time periods of communication capability and A-loT devices are configured with specifically designed new operation states. A-loT devices may support two types of services, namely "inventory" and "command", wherein a detailed specification thereof is still to be decided upon. However, "inventory" service relates to a service, where an A-loT device provides its device identifier when triggered, whereas "command" service relates to a service where an A-loT device may be instructed to provide certain data. For systems including A-loT devices, further modifications and options may facilitate efficient operation of the communication system as well as particular devices pertaining to the system.

### SUMMARY

One non-limiting and exemplary embodiment facilitates providing apparatuses and methods for wireless communication systems including loT devices with improved scheduling of resources in a paging procedure.

In an embodiment, the techniques disclosed here feature an Internet of Things, IoT, device, comprising a transceiver and circuitry. The transceiver, in operation, receives a paging message indicating resource information regarding one or more resources, wherein the one or more resources are grouped in one or more resource sets in respective time slots and/or frequency units, and an entirety of the one or more resources of the one or more resource sets forms a resource pool. The transceiver further receives a trigger message indicating that a resource set, from among the one or more resource sets, is scheduled to be made available for transmission. The circuitry, in operation, randomly selects a first resource included in the resource pool as a resource for transmission of a paging response message. Further, the circuitry, in operation, controls the transceiver to transmit the paging response message in the first resource, if the first resource is included in the resource set corresponding to the trigger message.

It should be noted that general or specific embodiments may be implemented as a system, a method, an integrated circuit, a computer program, a storage medium, or any selective combination thereof. For instance, an integrated circuit can control a process of an Internet of Things, loT device, or communication node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the procedures of the present disclosure may be applied;
- **Fig. 2**: exemplarily illustrates the interplay between an A-loT device, a reader or base station, and an A-loT application;
- **Fig. 3**: illustrates a node-A-loT device topology;
- **Fig. 4**: illustrates another node-A-loT device topology;
- **Fig. 5**: illustrates transmissions between a reader and an A-loT device according to services "inventory" and "command";
- **Fig. 6**: illustrates an approach for scheduling of resources for transmissions between a node and an loT device in a paging procedure to which embodiments of the present disclosure may be applied;
- **Fig. 7**: illustrates challenges associated with a conventional scheduling approach within the context of loT paging;
- **Fig. 8**: is a block diagram of a communication system in accordance with exemplary embodiments of the present disclosure;
- **Fig. 9**: illustrates the steps of a method for an loT device in accordance with exemplary embodiments of the present disclosure;
- **Fig. 10**: illustrates the steps of a method for a communication node in accordance with exemplary embodiments of the present disclosure;
- **Fig. 11**: illustrates transmissions and scheduling in an loT paging framework according to a first embodiment;
- **Fig. 12**: illustrates transmissions and scheduling in an loT paging framework according to a variation of the first embodiment;
- **Fig. 13**: illustrates transmissions and scheduling in an loT paging framework according to a second embodiment;
- **Fig. 14**: illustrates transmissions and scheduling in an loT paging framework according to a third embodiment;
- **Fig. 15**: illustrates transmissions and scheduling in an loT paging framework according to a first variation of the third embodiment;
- **Fig. 16**: illustrates transmissions and scheduling in an loT paging framework according to a second variation of the third embodiment; and
- **Fig. 17**: shows exemplary functional split options in 5G O-RAN.

### DETAILED DESCRIPTION

### 5G NR system architecture and protocol stacks

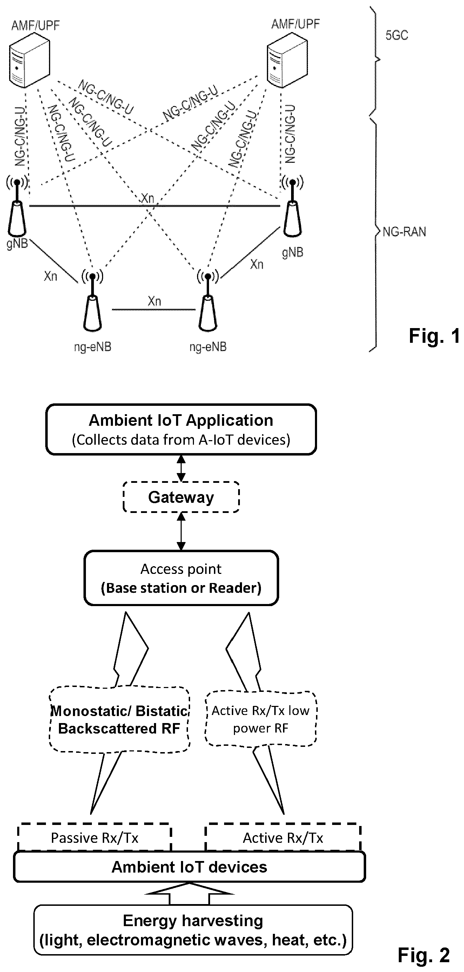

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v18.0.0, section 4).

### Ambient IoT Device

An ambient loT device (A-loT device) is an energy harvesting device or terminal having a small battery or having no battery. An A-loT device may be an ultra-low complexity device with ultra-low power consumption for very-low end loT applications. Examples for A-loT devices include - without any limitation - wearables, smart home devices, automotive devices, sensors, smart keys, healthcare devices, etc.

**Fig. 2** exemplarily illustrates the interplay between an A-loT device, a reader or base station, and an A-loT application.

An loT system with an A-loT device, access point, and application functions as follows. The A-IoT device may be a sensor that autonomously monitors parameters like temperature or humidity. It may harvest energy from light, electromagnetic waves, heat, and/or any other suitable power source, ensuring low power operation. The device could be passive, using backscattered communication to reflect RF signals, or active, e.g. transmitting data via low-power RF protocols.

The access point, which may be a reader or a base station, collects data from these loT devices, often using RF communication or short-range wireless protocols. It processes the incoming signals, decodes them, and forwards the data to a gateway. The gateway serves as a bridge, transmitting the data to an application through a network connection, like Wi-Fi or cellular.

The application receives, stores, and may analyze the data, and may provide real-time insights, alerts, and visualization to users, for example. It may also trigger actions based on the data, such as activating devices or adjusting system parameters. Examples of the application are automated warehousing, electronic shelf labelling, or the like. Further details may be found, for instance, in 3GPP TR 22.840 v19.0.0 "Study on Ambient power-enabled Internet of Things".

A-loT devices lack RRC states and ARQ and HARQ transmission protocols that ensure reliable data delivery, A-loT devices have limited power available resulting in reduced time periods of communication capability and A-loT devices are configured with new specifically designed new operation states. Thus, integration of A-loT devices into 5G and future technologies poses a demanding problem that is addressed in the present disclosure.

That is, the power consumption and the complexity of A-loT devices are much lower than existing 3GPP loT technologies (e.g. NB-loT, eMTV, RedCap) and shall address use cases and scenarios than cannot otherwise be fulfilled by existing 3GPP loT devices.

### Topologies

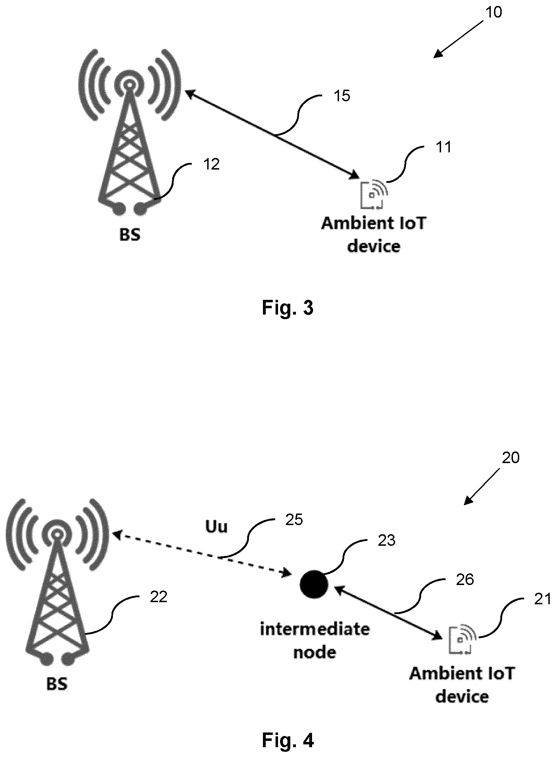

Particularly, two different topologies are exemplarily considered in this disclosure. In a first topology 10 as illustrated in **Fig. 3****,** an A-loT device 11 directly and bidirectionally communicates with a base station 12 over a wireless channel 15. In general, the A-loT 110 may be any kind of loT device. The communication may include transmitting and/or receiving signals that may carry data. The data may include user data (e.g. measurements performed by the loT) and/or signaling information or signals such as control signals, reference signals or the like. The direct communication with the base station 12 may still include communication via one or more distributed units, DU, of the base stations 12. A base station 12 may operate one or more cells.

In a second topology as illustrated in **Fig. 4****,** an A-loT device 21 bidirectionally communicates with an intermediate node 23 that is located between the A-loT device 21 and the base station 22. The intermediate node 23 could be a UE, IAB, relay, or NCR. The intermediate node 23 is communicatively connected to both the base station 22 and the A-loT device 21 and transfers the user data and/or signaling between the A-loT device 21 and the base station 22. Traffics are A-loT device terminated or A-IoT device originated. The base station 22 may communicate with the intermediate node 23 via a first interface 25. In **Fig. 4****,** this is exemplified as the Uu interface (UE - gNB interface in NR). The intermediate node 23 may communicate with the A-IoT device 21 via a second interface 26. The present disclosure is not limited to any specific interface definition. In general, interfaces 25 and 26 may be both wireless interfaces.

The A-loT protocol stack shall support only MAC layer and a physical (PHY) layer, which can provide service to the topmost layer (for e.g. A-loT application layer) to send/receive data over the A-loT air interface. New states will be introduced for MAC layer, like ON, OFF, and RETENTION/ SLEEP to support discontinuous transmission for energy saving of low power devices. It is assumed that A-loT does not support mobility (e.g. No cell selection/ re-selection/ handover functions as in legacy NR).

Further details may be found for instance, in 3GPP RP-240826 "Revised SID: Study on solutions for Ambient IoT (Internet of Things) in NR" or 3GPP TR 38.769 "Study on solutions for Ambient IoT (Internet of Things) in NR" v.19.0.0.

In the present disclosure, a reader may refer to a base station 12 or an intermediate node 23. A reader or a base station may be referred to as a communication node. Further, a communication node may include a reader/a base station and a network node. In the present disclosure, a transmission from an loT device to a reader or a base station is referred to as D2R and a transmission from a base station or a reader to an loT device is referred to as R2D.

### Services provided by an A-IoT device

A-loT devices are envisaged to provide two types of services, namely "inventory" and "command". For an "inventory" service, the A-loT device provides a device identifier when triggered by a reader or a base station. For a "command" service, the reader or base station may instruct the A-loT device to perform certain operations like providing certain information. That is, in contrast to "inventory" service, wherein the A-loT device may merely respond to a paging signal with its ID, an A-loT device performing "command" service may be actively controlled by the reader or base station.

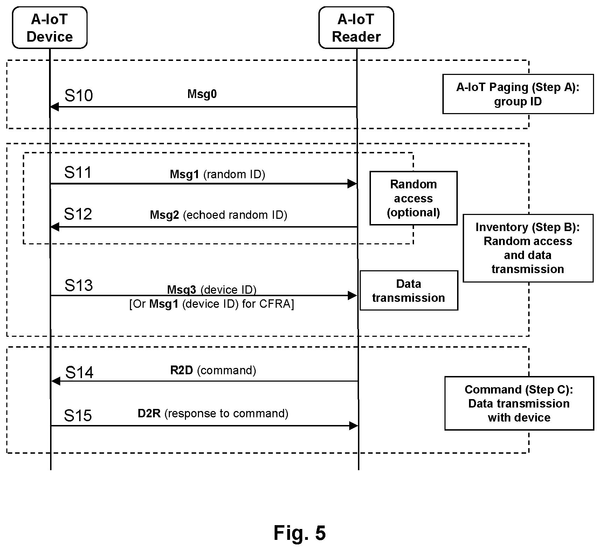

In the following, a baseline procedure related to the communication between a reader and an IoT device is described. **Fig. 5** illustrates transmissions between a reader and an A-loT device according to services "inventory" and "command".

In the figure, three main steps are indicated as steps A, B and C.

During step A, an initial trigger message (A-loT paging message) is transmitted in S10 from the reader to the loT device. This message may be referred to as Msg0 and may consist of a device identifier (device ID) to trigger one A-loT device or a group identifier (group ID) to trigger multiple A-loT devices belonging to a group associated with the group ID.

In step B, a procedure similar to a random access procedure may be performed, if required. This random access procedure may be performed in a 2-step approach or a 3-step approach, as detailed further below.

In an exemplary 3-step approach, a random ID may be generated and transmitted by the device in Msg1 in step S11. In Msg2, which is transmitted in step S12, the reader may echo the received ID. The loT device may consider the contention resolution successful if Msg2 includes the same random ID as transmitted in Msg1. In Msg3, transmitted in step S13, the loT device may send a device ID and/or other upper layer data to the reader.

In a contention-free paging procedure (contention-free random access, CFRA), steps S11 and S12 may be skipped, such that the loT device transmits its device ID in Msg1 in response to the reception of the paging message Msg0.

In an exemplary 2-step approach, the loT device may transmit its ID and/or other upper layer data to the reader in Msg1. The reader may then echo some information from Msg1 in Msg2 to the loT device.

In step C, communication between the A-loT device and the reader may be performed, wherein, for example, the reader requests a transmission of certain data in step S14. In step S15, the loT device responds to the request, for instance with the requested data. It is to be noted that an "inventory" service may utilize steps A and B only, whereas a "command" service may utilize steps A to C.

It is to be noted that a procedure involving steps A and B may be termed "inventory-only" use case, whereas a procedure involving steps A to C may be termed "inventory and command" use case.

### Scheduling for paging response

As described above, upon reception of a paging message Msg0, an loT device may respond with Msg1 carrying, for example, random device identifier in case of contention-based random access, or carrying a device identifier in case of contention-free random access. This paging response message is transmitted on a certain occasion, which may also be referred to as resource, which is randomly selected from among resources included in a resource pool.

According to ongoing discussions, the resources may be grouped in resource sets, each including one or more resources, wherein each of the resource may be characterized by its location in frequency domain and time domain. Said location may be termed "slot" in time domain and "unit" in frequency domain. These terms, however, are not considered to be interpreted in a limiting manner. Alternative terms might be "occasion", "subband", "resource block", "resource block group", "time slot", "time domain resource", "frequency domain resource", or the like.

For example, for Msg1 transmission determined by one R2D transmission triggering random access, one or two time domain resources are supported for transmissions from the loT device to the reader only (X=1, 2). Each D2R transmission for Msg1 may occur in one time domain resource of the X time domain resource(s) in Rel-19.

Further, according to ongoing discussions, the scheduling of a resource set may be indicated by a message transmitted from the reader to the loT device. In other words, the reader may provide the loT device with scheduling information, e.g. in Msg0. Further, in a new message, which will be referred to as MsgX in the framework of this disclosure, the reader may indicate/trigger a resource set as being scheduled to be available. In other words, MsgX indicates the start of a set of resources for transmission of Msg1, wherein the set(s) of resources may be configured in the paging message Msg0. It is to be noted that, although the term "MsgX" is used throughout this disclosure, this is not limiting. Alternative terms indicating said message may be "Xrep message", "Msg1 resource set", "D2R resource set", "Msg1 trigger R2D", or the like.

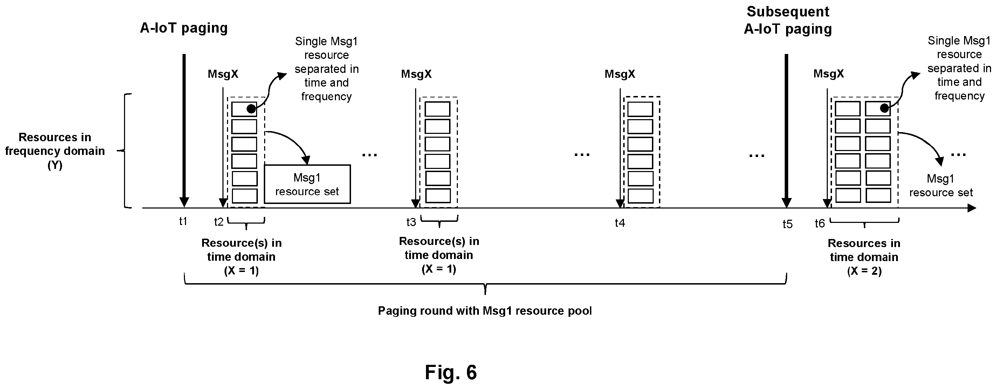

**Fig. 6** illustrates an approach for scheduling of resources for transmissions between a node and an IoT device in a paging procedure to which embodiments of the present disclosure may be applied. In the figure, the time domain is illustrated on a horizontal axis (X), whereas the frequency domain is indicated on a vertical axis (Y).

As described further above, the loT device may receive a paging message (e.g. Msg0) at time t1. Said paging message may carry information regarding one or more resources, which may be grouped in one or more resource sets. Embodiments of the resource information are described further below. Upon reception of MsgX at time t2, the loT device is triggered to expect resources for transmission of Msg1. In other words, MsgX triggers the start of a resource set for uplink transmission. In the example illustrated in Fig. 6, a resource set of a first paging round consists of six resources within one time slot (X=1) and six frequency units (Y=6). Each resource is here characterized by its time slot and frequency unit. Subsequently, the loT device may receive a second MsgX at time t3, again triggering the availability of another resource set which, in the illustrated case, corresponds to the previously triggered resource set in the sense that six resources within one time slot and six frequency units are included in said resource set. Further, subsequently, the loT device may receive another MsgX at t4, again triggering a resource set. The paging round may include a certain number of MsgX transmission events, which is not limited to a specific number and may be, for example, determined by the reader.

After reception of a subsequent paging message Msg0 at t0, another paging round is initiated, similar to the first paging round. However, in the illustrated example, each resource set in the second paging round includes resources within two time slots (X=2) and six frequency units (Y=6).

It is to be noted that the present disclosures is not limited to any specific number of time slots, frequency units, paging rounds, MsgX transmissions in a paging round, or the like. Further, it is to be noted that MsgX may not include scheduling information in the sense that the location of resources for uplink transmission are not indicated by MsgX. Rather, MsgX may trigger a resource set in a sense that the loT device is made aware that resources for uplink transmission, e.g. as indicated in resource information in Msg0, will be available for uplink transmission after reception of MsgX.

### Further Improvements

The present disclosure addresses the integration of scheduling in the framework of a paging process of an loT device. The disclosure provides solutions and implementations facilitating efficient and improved scheduling and management of resources dedicated to a first transmission in D2R, in particular the selection of resource elements for such transmissions.

### Embodiments

It is noted that the present disclosure is not limited to A-loT devices. It may be also applicable to any other kind of IoT devices or to other devices with possibly substantial power limitations. For example, the terms loT device and A-loT device are used interchangeably in this disclosure.

In the following, a node communicating with an A-loT device and, for example, receiving data from the A-loT device, may be also referred to as a reader, or a communication node.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) or loT device or A-loT device is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" or "communication node" or "reader" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the A-loT device and the base station, a communication node or an intermediate node is typically standardized and may be defined by different layers, such as PHY, MAC, RRC etc.

The present disclosure relates to an A-loT device, a communication node like a base station or an intermediate node connected to a base station, and methods of communication between the A-loT device and the communication node, in particular addressing scheduling of resources for a first D2R transmission in a paging procedure of an loT device.

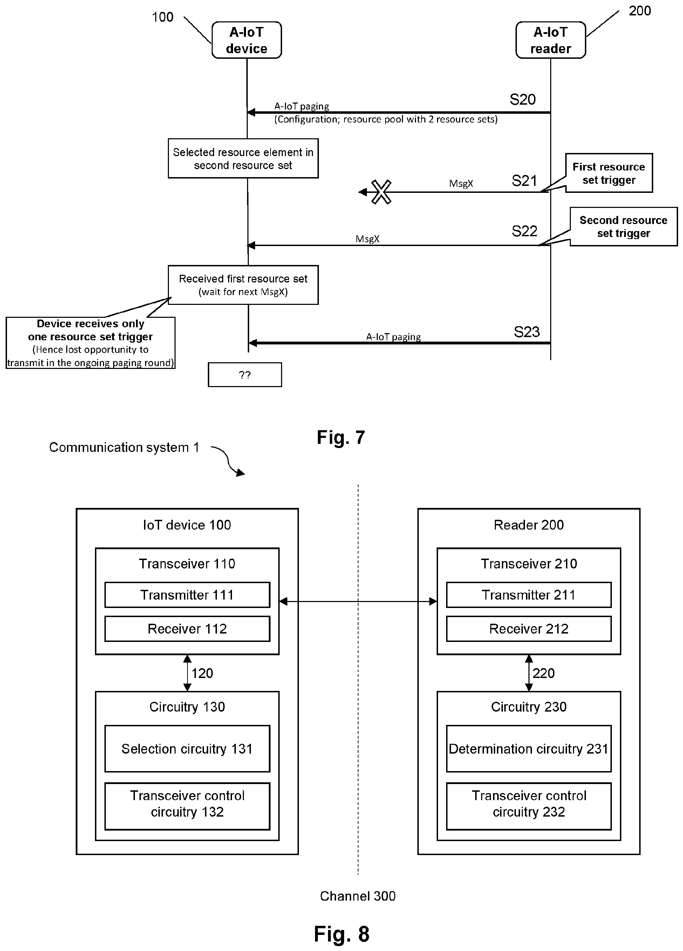

**Fig. 7** illustrates challenges associated with a conventional scheduling approach within the context of loT paging. In the illustrated situation, an IoT device 100 receives a paging message, e.g. Msg0, from a reader 200. The paging message includes resource information regarding two resource sets. Each resource set may include one or more resources and its availabilities is scheduled by respective messages MsgX. The loT device 100 may be configured, indicated or provided with information required for determining the location in time and frequency of the resources of the resource sets with respect to a reception timing of a corresponding MsgX. For example, the loT device 100 may be configured, indicated, or provided with a relative position in time of the resource set with respect to the reception time of the respective MsgX. In the illustrated example, the paging message received in step S20 indicates that two resource sets are intended to be triggered by the reader 200 in the course of the ongoing paging round, i.e. until a new paging message is going to be transmitted.

After reception of the paging message, the loT device 100 may select a resource (a time slot and a frequency unit) from among all resources expected to be scheduled in the paging round. That is, the loT device 100 may select a resource from the first resource set expected to be triggered by a first MsgX or a resource from the second resource set expected to be triggered by a second MsgX.

The MsgX does not necessarily carry scheduling information in terms of information required to determine the location in time and frequency of the resources of the triggered resource set. Rather, the reception of the MsgX by the loT device 100 is interpreted as a trigger indicating to the loT device 100 that the respective resource set is made available/scheduled. For example, a first and a second MsgX triggering the first and the second resource set, respectively, are transmitted in steps S21 and S22. However, if the transmission of the first MsgX fails, i.e. the first MsgX is not successfully received by the loT device 100 in step S21, the loT device 100 interprets the reception of the second MsgX as the first MsX, resulting in lost opportunities to transmit a paging response message. For example, if a resource from the second resource set is selected as a resource to be used for transmission of the paging response message, and the first MsgX is not received successfully, the loT device 100 is not able to transmit its paging response message in this paging round.

The present disclosure addresses scheduling in the framework of a paging procedure of resources for an IoT device 100.

**Fig. 8** is a block diagram of a communication system 1 in accordance with exemplary embodiments of the present disclosure. The communication system 1 may be a wireless communication system in accordance with the technical specifications of 5G, in particular a NR (New Radio) communication system. However, the present disclosure is not limited to 3GPP NR terrestrial networks (TN) and may also be applied to NTNs (non-terrestrial networks) or other wireless or cellular systems.

Fig. 8 illustrates a general, simplified and exemplary block diagram of an Internet of Things, loT, device 100 (which may be exemplarily assumed to be a user equipment (UE) or communication terminal) and a communication node 200 or scheduling device or scheduling node (which may be exemplarily assumed to be located in a network node, e.g. in an LTE eNB (alternatively termed ng-eNB) or the gNB in 5G NR) in the communication system 1. However, in general, a communication node 200 may also refer to an intermediate node, a terminal in case of a sidelink connection between two terminals. Moreover, in particular with respect to the use cases of URLLC (ultra reliable low latency communication), eMBB (enhanced mobile broadband), and mMTC (massive machine type communication), the loT devices 100 may also be a sensor device, a wearable device, a connected vehicle, or a controller of an automated machine in an industrial factory.

As illustrated in Fig. 8, the loT device 100 and communication node 200 may communicate with each other over a (wireless) physical channel 300 respectively using their transceivers 110 (IoT device side) and 210 (communication node side). Together, the communication node 200 and the loT device 100 may form the communication system 1. The communication system 1 may further include other entities such as those shown in Figs. 1, 3, or 4, e.g. a plurality of loT devices 100 connected to the communication node 200 or a relay node relaying signals to/from the communication node 200 from/to loT devices 100.

As illustrated in Fig. 8, the loT device 100 may comprise a transceiver 110 (e.g. including a transmitter 111 and/or a receiver 112) and circuitry 130 (processing and/or control circuitry), and the base station 200 may comprise a transceiver 210 (e.g. including a transmitter 211 and/or a receiver 212) and (processing and/or control) circuitry 230.

The term transceiver refers to a front end including one or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term transceiver is used for hardware and software components that allow an loT device or a communication node to transmit and/or receive radio signals over a wireless channel. Accordingly, a transceiver corresponds to a receiver, a transmitter, or a combination of receiver and transmitter. Typically, a communication node and an loT device are assumed to be capable of transmitting as well as receiving radio signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term circuitry herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver 110, 210 and the circuitry 130, 230 there may be an input/output point (or node) over which the circuitry 130, 230, in operation, can control the transceiver 110, 210, i.e. control the receiver 112, 212 and/or the transmitter 111, 211 and exchange reception/transmission data. The circuitry 130, 230 may implement control tasks such as controlling the transceiver 110, 210 to transmit data provided by the circuitry 130, 230 and/or receive data, which is further processed by the circuitry 130, 230. The circuitry 130, 230 may also be responsible for performing other processes such as determining, deciding, calculating, measuring, selecting, etc.

In the exemplary loT device 100, the circuitry 130 may control the transceiver 120, which may include the transmitter 111 and the receiver 112, to receive and/or transmit data. This may be performed by a transceiver control circuitry 132 included in the circuitry 130. This is illustrated by an arrow 120 which represents schematically an interface between the circuitry 130 and the transceiver 110, over which the control is performed.

In the exemplary communication node 200, the circuitry 230 may control the transceiver 210 to receive and/or transmit data. This may be performed by a transceiver control circuitry 232 included in the circuitry 230. This is illustrated by an arrow 220, which represents schematically an interface between the circuitry 230 and the transceiver 210, over which the control is performed. For example, the circuitry 230 may instruct the transceiver 210 to transmit data.

As mentioned above, references to 5G New Radio communication systems are merely exemplary, and the present invention is applicable to other communication systems including present and future standards. Moreover, short expressions "IoT device" and "reader" may be used for the reader's convenience, and descriptions of behavior of an IoT device and a reader the description can more generally be applied to a communication apparatus or a communication node.

In the loT device 100 provided by the present disclosure, shown in Fig. 8 (left-hand side), the transceiver 110, in operation, receives a paging message indicating resource information regarding one or more resources, wherein the one or more resources are grouped in one or more resource sets in respective time slots and/or frequency units, and an entirety of the one or more resources of the one or more resource sets forms a resource pool. The transceiver 110 further receives a trigger message indicating that a resource set, from among the one or more resource sets, is scheduled to be made available for transmission. The circuitry 130, in operation, randomly selects a first resource included in the resource pool as a resource for transmission of a paging response message; and controls the transceiver 110 to transmit the paging response message in the first resource, if the first resource is included in the resource set corresponding to the trigger message.

In the communication node 200 provided by the present disclosure, shown in Fig. 8 (right-hand side), the circuitry 230, in operation, determines resource information regarding one or more resources, wherein the one or more resources are grouped in one or more resource sets in respective time slots and/or frequency units, and an entirety of the one or more resources of the one or more resource sets forms a resource pool. The transceiver 220, in operation, transmits a paging message indicating the resource information, transmits a trigger message indicating that a resource set, from among the one or more resource sets, is scheduled to be made available for transmission, and receives a paging response message in a randomly selected first resource included in the resource pool.

In Fig. 8, the loT device circuitry 130 is exemplarily considered to comprise, further to the transceiver control circuitry 132 mentioned above, selection circuitry 131, which, in operation, selects the first resource included in the resource pool. Said selection circuitry 131 may also be responsible for processing or evaluating received signaling and obtaining therefrom the transmitted data.

The communication node circuitry 230 is exemplarily considered to comprise, further to the transceiver control circuitry 232 mentioned above, determination circuitry 231, which, in operation, determines the resource information. Said determination circuitry 231 may be responsible for processing or evaluating received signaling and obtaining therefrom the transmitted data.

It is, however, noted that the circuitries 130, 131, and 132 as well as circuitries 230, 231, and 232 may implement more functionality than the above-mentioned, and the functionalities mentioned above are in general implemented by circuitries 130 and 230 without being limited to comprising the respective circuitries 131, 132 and 231, 232 described above.

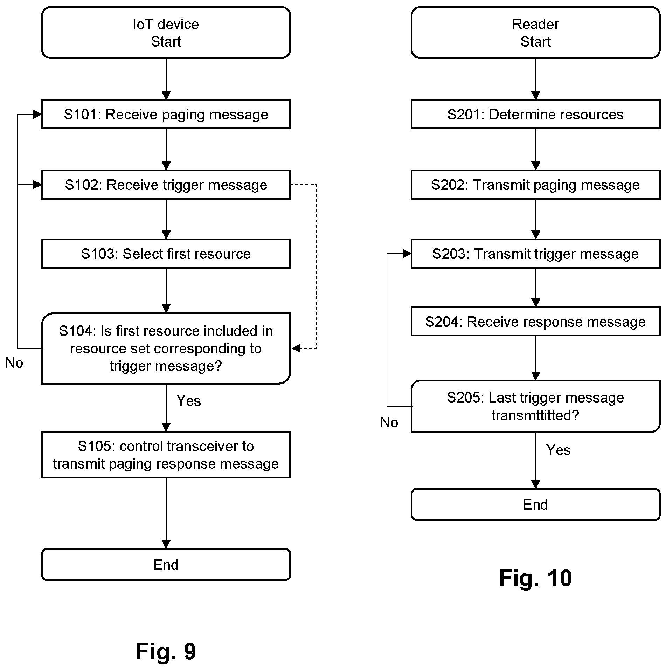

In correspondence with the above-described IoT device 100, a method for an loT device 100 is provided. **Fig. 9** illustrates the steps of a method for a loT device 100 in accordance with exemplary embodiments of the present disclosure. As shown in the figure, the method comprises receiving a paging message indicating resource information regarding one or more resources in step S101, wherein the one or more resources are grouped in one or more resource sets in respective in time slots and/or frequency units, and an entirety of the one or more resources of the one or more resource sets forms a resource pool. In step S102, a trigger message is received, indicating that a resource set, from among the one or more resource sets, is scheduled to be made available for transmission. In step S103, the loT device randomly selects a first resource included in the resource pool as a resource for transmission of a paging response message. In step S104, it is determined whether the first resource is included in the resource set corresponding to the trigger message and, if so (yes in step S104), the paging response message is transmitted in step S105 in the first resource. If the first resource is not included in the resource set corresponding to the trigger message (no in step S104), the method returns to step S102, expecting reception of a new trigger message. However, the loT device 100 may also receive a new paging message after the determination of step S104. That is, the method may return to step S101.

It is to be noted that the present disclosure is not limited to the specific order of steps as indicated in Fig. 9 and described above. In particular, step S103 may be performed after reception of the paging message and before reception of the trigger message. Further, step S103 may be skipped if it has been performed once in the paging round. In other words, the loT device 100 may select a new first resource each time after reception of the trigger message, may select a first resource after reception of a paging message, i.e. only once for the paging round, or select a first resource after reception of the (first) trigger message, i.e. only once for the paging round.

Furthermore, in correspondence with the above-described communication node 200, a method to be performed by a communication node 200 is provided. **Fig. 10** illustrates the steps of a method for a communication node 200 in accordance with exemplary embodiments of the present disclosure. As shown in Fig. 10, the method comprises determining resource information regarding one or more resources in step S201, wherein the one or more resources are grouped in one or more resource sets in respective time slots and/or frequency units, and an entirety of the one or more resources of the one or more resource sets forms a resource pool. Further, in step S202, a paging message is transmitted, indicating the resource information. In step S203, a trigger message is transmitted, indicating that a resource set, from among the one or more resource sets, is scheduled to be made available for transmission. Subsequently, in step S204, g a paging response message is received in a randomly selected first resource included in the resource pool. In step S205, it is determined whether the trigger message transmitted in step S204 is the last trigger message intended to be transmitted in the paging round. If so (yes in step S205), the method ends. If not (no in step S205), the communication node 200 may proceed to step S203 and transmit a further trigger message.

It is to be noted that the present disclosure is not limited to the specific order of the steps illustrated in Fig. 10. Further, the communication node 200 may perform further determinations. For instance, the communication node 200 may re-determine a number of trigger messages to be transmitted in the paging round, i.e. transmit more or less trigger messages than previously intended. This may be performed considering the traffic during the paging round, e.g. the number of paging response messages received.

In the generic description of the loT device 100, the communication node 200, and respective methods above, as well as in the following, the resource information may refer to data that specifies or enables the determination of one or more characteristics of resources used in the paging procedure. In particular, the resource information may include or indicate a configuration, based on which the loT device 100 is able to determine the location of one or more resources within the one or more resource sets.

Each resource set may correspond to a predetermined or dynamically configured group of time-frequency resources, such as paging occasions, control channel elements, or scheduling intervals. The triggering of a given resource set is initiated by the trigger message received by the loT device 100. The resource information may, for example, define parameters such as an offset, index, repetition pattern, and/or mapping rule that allows the loT device 100 to locate the relevant resource(s) within the triggered resource set.

In this framework, a resource may be a unit of communication capacity, such as a time slot, frequency unit, frequency band, or channel element, allocated or assignable for transmission of the paging response message. The resource information may be configuration data enabling the determination of where and when the resources will be used or monitored. A resource set may be a collection of one or more resources grouped according to predefined or dynamic rules. The trigger message may be a signaling message that actives or identifies the use of a specific resource set. Said specific resource set may be denoted a resource set corresponding to/according to the trigger message.

The term resource pool refers to a logical aggregation of resources that are potentially available for use in the paging procedure. Specifically, the entirety of the one or more resources comprised within the one or more resource sets may collectively form the resource pool.

Each resource set may comprise one or more individual resources. While a resource set may be associated with a specific trigger condition, configuration or message, the resource pool represents the total set of all such resources that the loT device 100 may consider or monitor in the context the paging procedure. The resource pool may be determined using the resource information and, optionally, further data that is configured, indicated, or defined.

For example, the resource information indicates at least one of a number of resources of the resource pool, a number of trigger messages to be expected, a number of resources of each of the one or more resource sets, a number of time slots of the one or more resource sets, and a number of frequency units of the one or more resource sets.

The term trigger message refers to a signaling message that causes or enables the loT device 100 to consider a specific resource set as available or active for transmission of a paging response message. The triggering of availability of a resource set may involve informing the loT device 100 that the corresponding resources may potentially be used for transmission of the paging response message according to a defined pattern. The trigger message may be, for example, MsgX explained further above. However, the present disclosure is not limited thereto, and the trigger message may be any other node-originated message carrying information that activates or identifies the relevant resource set.

The loT device 100 randomly selects a first resource from among the resources included in the resource pool, wherein the selected resource is intended to be used for the transmission of a paging response message. The term "first resource" is not intended to imply any specific location or relationship of the resource with respect to other resources included in the pool, but rather serves the purpose for differentiating the selected resource from the other resources of the resource set(s) and the resource pool.

For example, the paging response message indicates a random identifier or an identifier associated with the loT device 100.

The random selection may refer to a selection process that is at least partially nondeterministic, such that the first resource is chosen based on a random function, pseudorandom algorithm, or a probabilistic rule. This selection may aim to reduce collision probability with other devices responding simultaneously, enhance resource diversity, or support distributed scheduling.

It is to be noted that, as described above, the random selection of the first resource may be performed once or multiple times during the paging round. For example, the first resource may be selected after reception of the paging message, or each time after reception of a trigger message.

Further, the present disclosure is not limited to the reception of a single trigger message. The loT device 100 may receive multiple trigger messages during the paging round, each triggering availability of a respective/corresponding resource set.

The above-described general concepts of the present disclosure and further aspects of the disclosure will be described in more detail in the framework of the following embodiments and variations.

### Embodiment 1

According to embodiment 1 of the present disclosure, the loT device 100 performs the random selection of the first resource from among the entire resource pool configured by the paging message. This selection may be performed between reception of the paging message and reception of the (first) trigger message or after reception of the (first) trigger message. For this purpose, the loT device 100 may select the first resource from the among the total resource configuration indicated in the paging message, with parameters like the total resources in the paging round, a number of resource sets for D2R transmissions, and/or a number of expected trigger messages in the paging round.

In other words, according to the present embodiment, the resource information indicates the one or more resource sets, and the circuitry 130, in operation, randomly selects the first resource from among all of the resources of the resource pool.

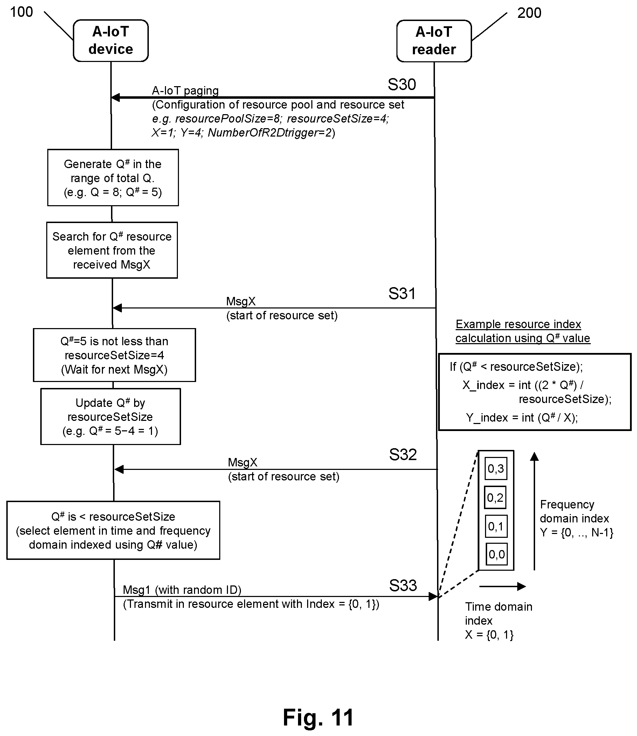

**Fig. 11** illustrates transmissions and scheduling in an loT paging framework according to the first embodiment.

In step S30, the loT device 100 receives, from the reader 200, the paging message. In the illustrated example, the paging message indicates a configuration of the resource pool and respective resource sets.

In the illustrated example, the paging message configures total resource allocation for Msg1. The configuration parameters used to allocate the resources could include the number of trigger messages (or number of Msg1 resource sets) expected to be triggered in one paging round, a number of time domain resource elements (time slots) in each Msg1 resource set. Said number may be 1 or 2 (*X={1, 2)),* for example. The paging message may indicate the number of frequency domain resource elements (frequency units) in each resource sets as *Y={1,* ..., *N},* and/or the total number of resources in the resource pool, which can be configured explicitly or derived using other configuration parameters.

For example, the paging message may indicate the size of the resource pool *resourcePoolSize=8,* the size of the resource sets *resourceSetSize=4,* the number of time slots in each resource set *X=1,* the number of frequency units in each resource set *Y=4,* and the number of trigger messages to be expected in the paging round, i.e. until a further paging message is to be expected.

That is, in the example, two resource sets are expected to be triggered, each including four resources within a single time slot and four different frequency units. The resources may be indexed using indices of the time slot and indices of the frequency units, e.g. (0, 0), (0, 1), (0, 2), and (0, 3). Further the expected trigger messages may also be indexed as 0 and 1. Further, the resources of the resource pool may also be indexed as 0 to 7. It is to be noted that the indexing may be implemented in multiple ways and the present disclosure is not limited to any specific indexing, provided that each resource is uniquely identified by one or multiple indices.

After reception of the paging message in step S30, the loT device 100 randomly selects a resource from among all resources of the resource pool. For this purpose, the loT device 100 may calculate the number of resources in the resource set (resource pool size), denoted by Q, which is equal to 8 in the example illustrated in the figure. Q may also be considered to represent a 'Q'-factor, since it may be seen as an estimation to determine accessing of contention within a group of loT devices using the resources.

From among said resources, the loT device 100 randomly selects a first resource by randomly determining a number in a range up to the resource pool size. The randomly determined number, which corresponds and identifies the selected first resource of the resource pool, is denoted as Q#. In the example, Q#=5 is randomly selected. In the ongoing paging procedure, the loT device searches for the first resource Q#=5 in the resource sets triggered by the trigger message(s). In other words, after reception of each trigger message, the loT device 100 determines whether the first resource is included in the resource set corresponding to the trigger message. Q# may be stored by the loT device 100 to identify the corresponding resource element in the ongoing paging round.

In the illustrated example, after reception of the trigger message MsgX in step S31, the loT device 100 determines whether the selected first resource (Q#=5) is included in the resource set corresponding to the trigger message. Using, for example, the resource set size, which is equal to 4 in this example, the loT device 100 determines that the first resource is not included in the resource set, since Q#=5 is larger than the resource set size. Then, the loT device 100 may update Q# by subtracting the resource set size from the current Q# value. With this update, the new Q# value uniquely identifies the first resource within the remaining resource pool.

In this respect, it is noted that the "remaining resource pool" and the "remaining resources" relate to resources not yet indicated as being scheduled to be made available for a transmission in the paging round, i.e. the resources expected to be indicated as being scheduled to be available for a transmission in the ongoing paging round.

After reception of a second trigger message MsgX in step S32, the loT device 100 determines that the current Q# value is less than the resource set size and, accordingly, the first resource is determined to be included in the resource set corresponding to the trigger message. Therefore, the loT device 100 transmits the paging response message in a resource corresponding to the current Q# value. In the illustrated example, the paging response message Msg1 is transmitted in the resource of index=1, i.e. *X=0, Y=1* of the resource set.

In an alternative to the above the loT device 100 may randomly select the first resource element from the pool of total resources upon reception of the trigger message MsgX. If the first resource is included in the corresponding resource set, Msg1 is transmitted in said resource. If not, the determined Q# value may be discarded, and a further selection of a first resource may be performed upon reception of the next trigger message, from among the pool of remaining resources.

That is, according to the present embodiment, the loT device 100 identifies the resource by tracking the resource sets or counting each MsgX received or updating the Q# value with a resource configuration indicated by each MsgX. In a case of a missed opportunity, the loT device 100 may determine the presence of a failure of the ongoing paging round and may generate a new random selection of a first resource upon reception of another paging message, i.e. in the framework of a subsequent paging round.

With the approach of the present embodiment, the reader 200 may allocate resources in an easy and efficient manner, in particular when contention among a group of loT devices could be pre-determined or known.

In a case of higher congestion IoT devices (as detected by the reader 200 may be at the time when service request is sent by the CN), the reader 200 can schedule more resources sets than intended to be triggered by a number of trigger messages MsgX. Thereby, those loT devices which did not receive the expected MsgX (because the required/selected MsgX was not sent by the reader 200) would be pushed to access in the next paging round. Hence the reduced congestion in each paging round can be pre-determined and controlled by the reader 200.

### Variation

According to a variation of the present embodiment, the paging message configures a Msg1 resource allocation, just as in the first embodiment.

However, in each trigger message MsgX, the number of remaining resources is indicated in order to assist the loT device 100 in its random selection and to allow the loT device 100 to determine a missed opportunity. The remaining resources (e.g. indicated by an updated Q value) may include the resource set size dedicated to the immediate received trigger message MsgX along with the remaining pool size, i.e. the number of resources expected to be indicated/triggered after the reception of the trigger message within the paging round, i.e. until reception of the next paging message. The updated Q value may consider only the future resource pool, excluding the resources of the resource set triggered by the trigger message

In other words, the trigger message indicates an expected number of remaining resources of the resource pool. The circuitry 130, in operation, determines whether or not an index of the first resource exceeds the expected number of remaining resources, and selects, from among the remaining resources of the resource pool, a second resource as the resource for transmission of the paging response message, using the expected number of remaining resources and the index of the first resource, if the index of the first resource exceeds the expected number of remaining resources.

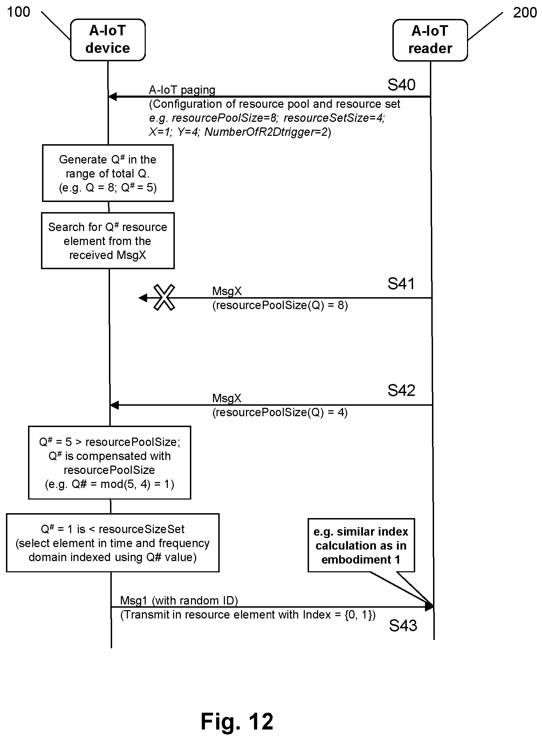

**Fig. 12** illustrates transmissions and scheduling in an loT paging framework according to the variation of the first embodiment.

Steps S40, S41 as well as the loT device's 100 operation performed there between correspond to the steps S31 and S32 and respective operations of Fig. 11. However, the trigger message MsgX of the present variation carries information on the size of the remaining resource pool. That is, the first trigger message MsgX transmitted in S41 indicates a pool size of Q=8, whereas the second trigger message MsgX transmitted in S42 indicates a remaining pool size of Q=4.

In the illustrated example, if the first trigger message MsgX is not successfully received by the loT device 100 in step S41, i.e. when the loT device 100 misses the first trigger message MsgX, it may become aware thereof when determining Q# after reception of the next trigger message MsgX, which indicates Q=4. Specifically, when comparing the random number Q#=5 with the indicated size of the remaining resource pool, namely 4, the loT device 100 determines tha Q# is larger than the remaining pool size and, hence, may determine that a trigger message has been missed.

In this case, that is when the selected Q# does not co-relate to the remaining resources indicated in the trigger message MsgX, e.g. when Q# is larger than the size of the remaining resource pool, the loT device 100 may compensate for the loss, e.g. by determining a new Q# value using, for example Q#= mod (5, 4) = 1. Then, the loT device 100 ay determine whether the new first resource corresponding to the new Q# value is included in the resource set corresponding to the trigger message and transmit the paging response message in the respective resource in step S43.

With the approach of the variation of embodiment 1, the impact of a missed opportunity or a lost sequencing of trigger messages Msg1 may be achieved because the loT device 100 may select the last resource set to ensure transmission of the paging response message in the ongoing paging round.

### Embodiment 2

According to embodiment 2 of the present disclosure, the paging message configures a resource set, e.g. a size of the resource set in terms of numbers of time slots and frequency units, associated with each trigger message. For example, the number of time slots and the number of frequency units may be determine and fixed for the paging round by the reader 200. Similarly, the paging message may indicate an initial estimated paging round size, i.e. a number of trigger messages MsgX to be expected during the paging round. Further, each trigger message may indicate the size of the remaining resource pool, similar to the variation of the first embodiment.

In other words, the trigger message indicates an expected number of remaining resources of the resource pool, and the circuitry 130, in operation, randomly selects the first resource from among the remaining resources of the resource pool.

The random selection of the first resource may be performed upon reception of each trigger message, e.g. by generating Q# similar to the approach of embodiment 1 and its variation. If the selected resource belongs to a resource set corresponding to a trigger message received, Msg1 is transmitted in said resource. If not, the random number Q# can be discarded and regenerated upon reception of the next trigger message. Alternatively, the loT device 100 may store the Q# value to be used during the remaining paging procedure, in a similar manner as in embodiment 1.

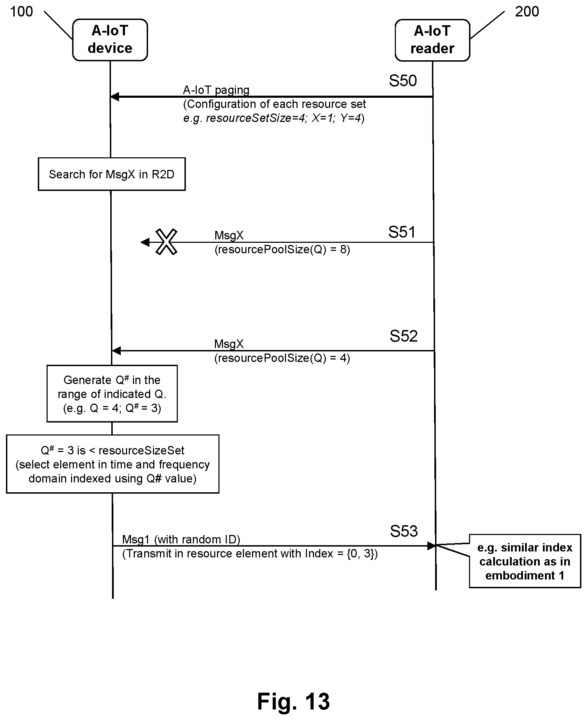

**Fig. 13** illustrates transmissions and scheduling in an loT paging framework according to the second embodiment.

In step S50, the loT device 100 receives a paging message from the reader 200. The paging message indicates a configuration of resource set. In this example, the configuration of the resource set is indicated by the size of the resource set, i.e. the number of resources included in each resource set, *resourceSetSize=4.* Further, the number of time slots *X=1* as well as the number of frequency units *Y=4* is indicated by the paging message. It is to be noted that the number of resources of a resource set may be explicitly indicated in the paging message or calculated by the loT device 100, using *X* and *Y.* Alternatively, the paging message may indicate the size of the resource set together with one of *X* and *Y* only, and the remaining value may be determined by the loT device 100, considering that the size of a resource set is given by *X·Y.*

After reception of the paging message in step S50, the reader 200 transmits a first trigger message MsgX in step S51 which, however, in the situation illustrated in Fig. 13, is not successfully received by the loT device 100. The trigger message carries the size of the remaining resource pool, which, in this example is given by *Q=8.* Since said trigger message is not received successfully by the loT device 100, the loT device 100 does not randomly select the first resource from the resource pool yet.

Further, in step S52, a second trigger message MsgX is transmitted by the reader 200 and is successfully received by the loT device 100. Said trigger message carries the expected size of the remaining resource pool, i.e. the number of resources expected to be indicated in the current paging procedure. From said resources, the loT device 100 randomly selects the first resource for transmission of the paging response message. For example, the loT device 100 generates Q# as a random number in the range of the indicated Q. In the illustrated example, the loT device 100 obtains a random number Q#=3. Subsequently, the loT device 100 determines whether the resource corresponding to the determined Q# value is included in the resource set triggered by the trigger message, which, in this example, is the case, as Q#=3 is less that the size of the resource set.

Accordingly, the loT device 100 determines the resource in the resource set corresponding to the determined Q# value and transmits the paging response message in said resource to the reader 200. It is to be noted that the indexing and the selection of the resource for transmission of the paging response message may be performed in the same or a similar manner as in embodiment 1 or its variation.

With the approach of the present embodiment, the duration of the paging round, i.e. the number of trigger messages and, accordingly, the number of resource sets available for transmission of paging response messages may be flexibly set by the reader 200. That is, the number of trigger messages and/or the number of available resource sets is not required to be fixed at the beginning of the paging round.

Further, the impact of a missed opportunity or lost sequencing of trigger messages is reduced, since the loT device 100 may discard the generated random number Q# if it does not transmit the paging response message in the resource set, and re-generate the random number Q# upon reception of the next trigger message. When the Q# value is stored, the loT device 100 may compensate for a missed trigger message, in the same or a similar manner as in the variation of the first embodiment.

### Variation 1

According to a first variation of embodiment 2, the paging message configures, via the resource information, only the number of frequency units of each resource set, wherein the number of time slots is indicated in each trigger message for the respective resource set. For example, the paging message may indicate that *Y=4,* and the trigger message may indicate that *X=2* and/or the size of the resource set corresponding to the trigger message is 8 (=*X·Y*).

In other words, the resource information may indicate a number of frequency units of the one or more resource sets, and the trigger message indicates a number of time slots of the resource set according to the trigger message.

With this approach, the loT device 100 may, for example, randomly select a frequency unit upon reception of the paging message. Further, upon reception of the trigger message, the loT device 100 may randomly select the time slot. That is, the loT device 100 may randomly select the first resource in a two-step procedure, wherein the frequency unit is selected first before the (first) trigger message of the paging round is received.

In other words, the circuitry 130, in operation, randomly selects the first resource by randomly selecting a frequency unit of the first resource before the trigger message is received and randomly selecting a time slot of the first resource after the trigger message is received.

Thereby, the loT device 100 may tune into the selected frequency at the start of the paging procedure, i.e. after reception of the paging message, by controlling the transceiver 110 accordingly. Since this procedure might be time-consuming, the random selection of the frequency unit before reception of the trigger message may improve the operation of the loT device during the paging procedure.

Further, this approach allows for flexibility of the reader 200 when scheduling the resource sets, since the reader 200 may decide upon the number of time slots after transmission of the paging message and/or for each resource set corresponding to the trigger messages separately.

### Variation 2

According to a second variation of embodiment 2, the paging message configures, via the resource information, only the number of time slots of each resource set, wherein the number of frequency units is indicated in each trigger message for the respective resource set. For example, the paging message may indicate that *X=2,* and the trigger message may indicate that *Y=4* and/or the size of the resource set corresponding to the trigger message is 8 (=*X·Y*).

In other words, the resource information may indicate a number of time slots of the one or more resource sets, and the trigger message indicates a number of frequency units of the resource set according to the trigger message.

With this approach, the loT device 100 may, for example, randomly select a time slot upon reception of the paging message. Further, upon reception of the trigger message, the loT device 100 may randomly select the frequency unit. That is, the loT device 100 may randomly select the first resource in a two-step procedure, wherein the time slot is selected first before the (first) trigger message of the paging round is received.

In other words, the circuitry 130, in operation, randomly selects the first resource by randomly selecting a time slot of the first resource before the trigger message is received and randomly selecting a frequency unit of the first resource after the trigger message is received.

Thereby, the loT device 100 may tune into a required chip rate at the start of the paging procedure, i.e. after reception of the paging message, to select between different time slot configurations (e.g. X=1 or 2). Since this procedure might be time-consuming, the random selection of the time slot before reception of the trigger message may improve the operation of the loT device 100 during the paging procedure.

Further, this approach allows for flexibility of the reader 200 when scheduling the resource sets, since the reader 200 may decide upon the number of frequency units after transmission of the paging message and/or for each resource set corresponding to the trigger messages separately.

### Embodiment 3

According to a third embodiment of the present disclosure, the paging message configures parameters for random number selection.

This is done by indicating a probability configuration involving a random value range and a threshold value. For example, the value range and/or a threshold may be configured in the paging message directly, or the loT device 100 may be configured with one or more probability configurations and the resource information indicates one of said configurations to be used for random number generation. The threshold may be used by the loT device 100 when determining whether a paging response message is to be transmitted in a resource of a resource set indicated by a trigger message.

In particular, upon reception of a trigger message, the loT device 100 may generate a random number according to the probability configuration, compare the random number with the threshold, and decide, depending on the result of the comparison, whether or not the paging response message should be transmitted in a resource of the resource set corresponding to the trigger message.

Optionally, if the paging response message is to be transmitted in a resource of the resource set, the random number may be mapped to one of the resources of the resource set, which is selected as the first resource for transmission of the paging response message. Alternatively, when it is determined that the paging response message is to be transmitted in a resource of the resource set, the loT device 100 may randomly select one of the resources of said resource set for transmission of the paging response message.

In other words, the resource information may indicates a probability configuration involving a random value range and threshold value, and the circuitry 130, in operation, after reception of the trigger message, may determine whether the first resource is to be randomly selected from resources included in the resource set corresponding to the trigger message, using the probability configuration.

For example, the circuitry 130, in operation, generates a random value within the random value range, determines whether or not the random value exceeds the threshold value, and determines whether the first resource is to be randomly selected from resources included in the resource set according to the trigger message depending on whether or not the random value exceeds the threshold value.

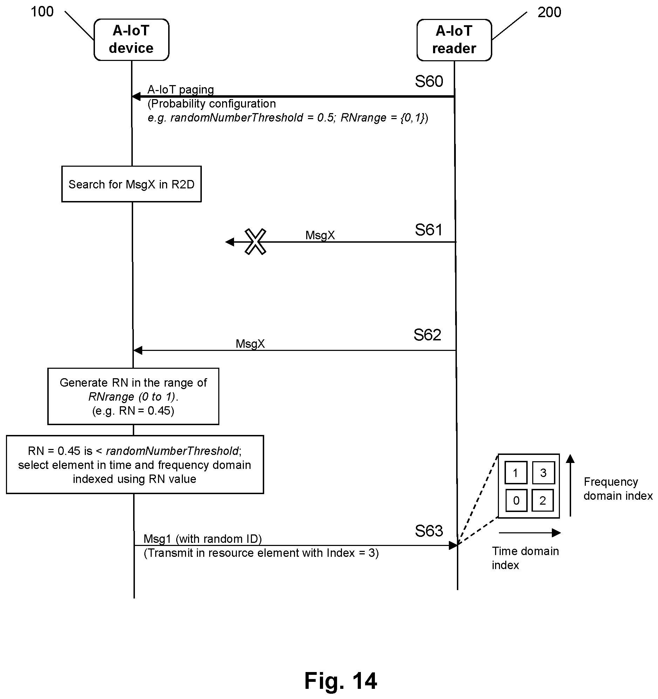

**Fig. 14** illustrates transmissions and scheduling in an loT paging framework according to the third embodiment.

In the illustrated example, the paging message transmitted in step S60 indicates a probability configuration, for example a threshold *randomNumberThreshold=0.5* and a range *RNrange={0,1}.* As detailed further above, the probability configuration may be indicated directly by the paging message carrying the information or indirectly by carrying information that is mapped to the probability configuration by the loT device 100. For example, the paging message may carry an indication pointing to one of the configurations, which may be listed as one or more configurations within a specification, for instance. In another example, default probability configuration may be predetermined, indicated or fixed (e.g. in a standard), and, upon reception of the paging message, the loT device 100 makes use of said default probability configuration.

Subsequently, the reader 200 transmits a first trigger message MsgX in step S61, which in this example is not successfully received by the loT device 100. A second trigger message MsgX is transmitted and successfully received by the loT device 100 is step S62.

After reception of said trigger message, the loT device 100 generates a random number RN in the range of the probability configuration, which is {0, 1} in this example. For example, the random number RN is equal to 0.45. Upon comparison of the generated random number with the threshold of 0.5 (in this example), the loT device 100 determines that the RN is below said threshold and, accordingly, a resource is to be selected from the resource set corresponding to the received trigger message.

For this purpose, the resource may be selected randomly or, alternatively, the RN already generated may be mapped to a resource to be selected for transmission of the paging response message. Further below, several examples are given in this respect.

Upon determination that the paging response message is to be transmitted and determination of the respective resource of the resource set, the loT device 100 transmits the paging message using the determined resource in step S63.

With this approach of the present embodiment, the paging message may be used to configure either a fixed resource set allocation, or only the resource set associated with each trigger message, which allows for flexible scheduling of resources by the reader 200 in the paging round.

Further, the definition of the random number threshold does not enforce all of a potential plurality of loT devices to transmit in a single paging round. Accordingly, contention may be distributed among the group into multiple paging rounds.

As already indicated above, the random selection configuration can be specified or indicated in the paging message in multiple ways. In the following, example implementations are given, including examples of mapping a random number to a resource of a resource set.

### Example 1

In a first implementation example, a random number range and a threshold value within said range is indicated by the paging message (e.g. *{0, 1}* and *0.5,* respectively). Upon determination as to whether the paging message is to be transmitted in a resource set after reception of a trigger message, the loT device 100 generates a random number RN in said range and compares it with the given threshold. If RN is less than the threshold, the paging response message is to be transmitted in a resource selected from the resource set.

For this purpose, the loT device 100 may use a mapping relation mapping a random number within the range up to the threshold to resources of the resource set. For example, the threshold value may be divided by the number N of resources included in the resource set to obtain the index of each element as *reference_index(n)={0, threshold*/*N*1, threshold*/*N*2, ..., threshold*/*N*N}.* The determined RN is then mapped to the resource element based on the comparison *reference_index(n) < RN < reference_index(n+1*). For example, if the resource set consists of 4 elements (*X=2, Y=2*) with threshold value of 0.5, *reference_index(n)={0, 0.125, 0.25, 0.375, 0.5},* such that the *RN=0.45* is mapped to index n=3 if the resources of the resource set (0.375 < RN=0.45 < 0.5).

### Example 2

In a second example, the random number range could be *{0, 1}*. Each trigger message MsgX may carry an estimated number of resources of the remaining resource pool (e.g. Q). The loT device 100 may determine a threshold as 1/Q, generate a random number RN, and use said threshold for the comparison in the determination as to whether the paging response message is to be transmitted in the resource set.

The mapping of the generated RN to the resource for transmission of the paging response message may be performed as described for example 1.

### Example 3

In a third example, an upper boundary of the random number range may be given by the total or estimated number of resources in the remaining resource pool (Q), resulting in a random number range of *{0, Q-1}*. A size of a resource set, as indicated in a trigger message, may be used as the threshold for determination as to whether the paging response message is to be transmitted in a resource of a resource set corresponding to the trigger message.

Upon determination of the RN, the loT device 100 may determine whether the RN is below the size of the resource set and, if so, determine that the paging response message is to be transmitted in a resource of the resource set. In this case, the RN may directly correspond to index of the resource to be selected as the first resource.

It goes without saying that the present disclosure is not limited to any of the above-described examples. Further, the numerical values given are to be understood as mere examples, and may be different from the specific values.

Further, IoT devices 100 that were not able to transmit at least one paging response message in a paging round, e.g. due to the selected random number not meeting the threshold criteria, may consider the current paging round to have failed and repeat a random access procedure in the next paging round.

### Variation 1

In a first variation of the third embodiment, the random value range may be indicated by the paging message, for instance as the estimated number of trigger messages to be expected. Further, in the loT device 100 may count the received trigger message and use the number of counted trigger messages for determination of the threshold value. For example, the counted number of trigger message may be used as the threshold value when determining a random number in a range up to the indicated number of trigger messages.

Alternatively, the loT device 100 may determine the random number in a range from the counted number of received trigger messages to the estimated total number of trigger messages as indicated in the paging message. If the random number is equal to zero, the loT device 100 may determine that the paging response message is to be transmitted in the resource set corresponding to the trigger message.

In other words, the resource information indicates the random value range, and the circuitry 130 determined the threshold value based on the number of received trigger messages. In other words, the trigger message(s) indicates the threshold number (in this implementation indirectly in a sense that the threshold value is obtained based on the number of trigger messages received.

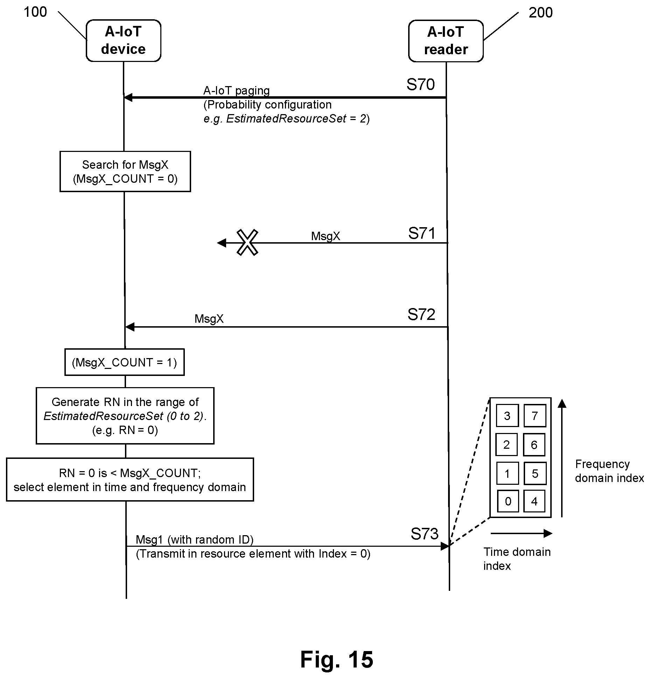

**Fig. 15** illustrates transmissions and scheduling in an loT paging framework according to the first variation of the third embodiment.

In step S70, the loT device 100 receives, from the reader 200, a paging message indicating the probability configuration. In this example, the probability configuration is implemented as the number of trigger messages and, accordingly, of resource sets intended to be triggered by the reader 200. In the illustrated example, the reader 200 intends to transmit two trigger messages and, accordingly, the paging message indicates an estimated number of resource sets equal to two, *EstimatedResourceSets=2.*

The loT device 100 initiates a trigger message counter MsgX_COUNT with an initial value of zero (MsgX_COUNT=0). Each time a trigger message is received by the loT device 100, the loT device 100 increases the value of the counter by 1 (MsgX_COUNT+=1).

In the illustrated example, the reader 200 transmits a first trigger message MsgX in step S71, which, however, is not successfully received by the loT device 100. A second trigger message MsgX transmitted by the reader 200 in step S72 is successfully received by the loT device 100, which increases the trigger message counter value to 1 (MsgX_COUNT=1).

Subsequently, the loT device 100 generates a random number RN in the range from zero to the indicated number of intended trigger messages as indicated in the paging message. In the present example, the random number RN is zero. Then, the loT device 100 compares the random number with the value of the trigger message counter, which serves as a threshold. If the random number is below the threshold value, the loT device 100 determines that the paging response message is to be transmitted in the resource set triggered by the (second) trigger message. Accordingly, the paging response message is transmitted by the loT device 100 in step S73.

In the illustrated example, the resource for transmission of the paging response message (first resource) may be randomly selected from the resources of the resource set if it is determined that the paging response message is to be transmitted in said resource set.

As an alternative to the above, the loT device 100 may determine a random number RN in the range from 0 to a difference between the intended total number of trigger messages as indicated in the paging message (total_MsgX) and the trigger message counter (i.e. {0, [total_MsgX-MsgX_COUNT]}). If the random number is zero, it is determined that the paging response message is to be transmitted in the resource set and a resource from among the resources of the resource set if randomly selected as the resource for transmission of the paging response message.

As an alternative to a random selection of the resource for transmission if it is determined that the paging response message is to be transmitted in the resource set, the selected random number RN may be mapped to a corresponding resource of the resource set. Further, alternatively, the loT device 100 may randomly select a time slot and randomly select a frequency unit so as to randomly select the resource for transmission of the paging response message.

According to the present variation, since different loT devices 100 may hold different values of the trigger message counter, e.g. due to different unsuccessful transmission of a trigger message, the probability for random selection is further distributed within the same paging round.

Further, the paging message may configured only the estimated/intended number of trigger messages. The actual number of trigger messages may differ therefrom, based on a decision by the reader 200, for example. Therefore, the variation allows for a flexible scheduling of resources for transmission of the paging response message.

### Variation 2

In a second variation of the third embodiment, the random value range may be indicated by the paging message, for instance as a range from zero to a value P. Alternatively, the range may be configured, indicated, or specified in a standard. In certain embodiment, multiple ranges may be configured, indicated or specified, and the resource information in the paging message indicates one of said potential configurations.

Further, each paging message may indicate a threshold for the determination as to whether the loT device 100 is to transmit the paging response message in a resource set corresponding to a received trigger message. Upon reception of a trigger message MsgX, the loT device 100 generates a random number RN, which is used together with the random number range and the indicated threshold for the determination, in the same or a similar manner as described for the third embodiment.

In other words, the resource information may indicate the random value range, and the trigger message may indicate the threshold value.

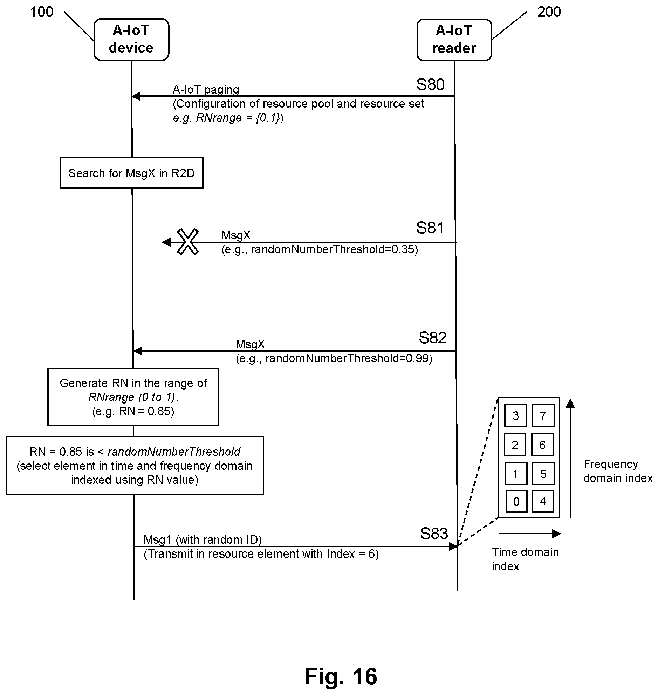

**Fig. 16** illustrates transmissions and scheduling in an loT paging framework according to the second variation of the third embodiment.

In step S80, the loT device 100 receives a paging message indicating resource information regarding the resources of the resource pool/the resource sets from the reader 200. In the illustrated example, the paging message indicates the random number range as *RNrang={0,1}.* In step S81, the reader transmits a trigger message MsgX indicating a threshold for the random number as *randomNumberThreshold=0.35.* However, in the illustrated example, the trigger message is not successfully received by the loT device 100 in step S81.

In step S82, the reader 200 transmits a second trigger message MsgX indicating a different threshold *randomNumberThreshold=0.99.* Said second trigger message is successfully received by the loT device 100, which generates a random number RN within the given range and compares said random number RN with the threshold indicated in the trigger message. In the example, the generated random number RN is equal to 0.85. Since said RN is below the threshold, the loT device 100 determines that the paging response message is to be transmitted in a resource corresponding to the received trigger message MsgX.

Accordingly, the loT device 100 selects a resource from among the resources of said resource set (e.g. in the same or a similar manner as in embodiment 3) and transmits the paging response message in step S83 in said resource.

With the approach of the second variation of the third embodiment, the threshold can be varied by the reader 200 dynamically during the paging round. For example, the threshold may be set as per the probability of the contention among the devices trying to access in one paging round. That is, the reader 200 may control (statistically), how many loT devices may try to transmit a paging response message in a resource set corresponding to the trigger message indicating the respective threshold. Alternatively, the reader 200 may set the threshold based on the remaining trigger messages intended to be transmitted in the paging round. In other words, if the threshold value is to a high value close to the upper boundary of the random number range, the reader 200 could ensure, for instance, that all loT devices 100 intending to transmit a paging response message may try so in a last resource set triggered by a last trigger message. Alternatively, the random number threshold may be set to the number of remaining resources intended to be included in the resource pool for the ongoing paging round.

### Further embodiments and variations

While specific embodiments and variations of the present invention have been described herein, it will be understood by those skilled in the art that various aspects of the disclosed embodiments can be combined, adapted, or modified in suitable ways without departing from the scope of the invention as defined by the claims.

For example, any of the features, steps, or configurations of the embodiments may be implemented in combination with other features or configurations described herein, provided that such combinations are technically feasible and within the understanding of a person skilled in the art. The various elements described in different embodiments may be selectively combined in any suitable manner, taking into account the context of the particular implementation or use case.

It is also contemplated that certain aspects or features may be implemented separately or in alternative configurations, and that such variations are within the scope of the invention. In particular, the combination of the following aspects (e.g., resource pool, random selection process, trigger message functionality, etc.) in different combinations and configurations is intended to be within the scope of the invention.

The skilled person will appreciate that the disclosed embodiments are not mutually exclusive, and can be implemented together or in part, depending on specific application requirements, hardware or software constraints, or system design considerations. Therefore, the invention is not limited to the individual combinations described, but encompasses all possible combinations and variations of the disclosed features that are technically compatible with one another.

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

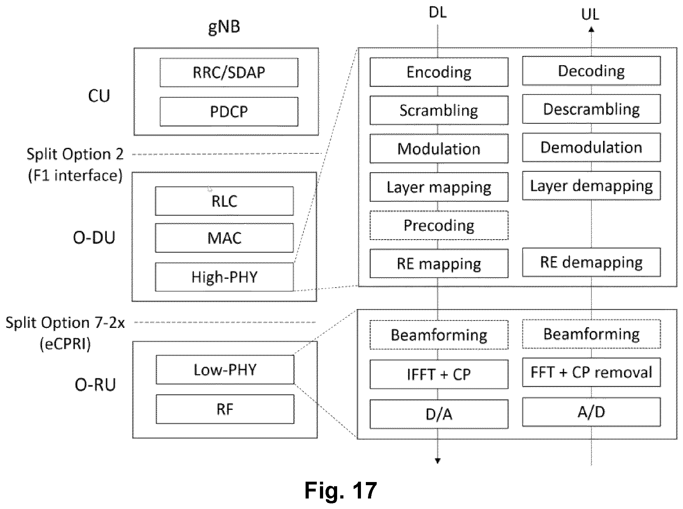

**Fig. 17** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD - Subband non-overlapping full duplex

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### User Equipment

A terminal or user terminal or user device or mobile station or mobile node is referred to in the LTE and NR as a user equipment (UE). This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient IoT

The terminal and the base station in one exemplary embodiment of the preset disclosure may be replaced with any of an Ambient IoT Device or an Ambient IoT Reader.

The Ambient IoT Device may be a wireless communication device having a backscattering function or having a transmission/reception bandwidth of several resource blocks or less. Further, the Ambient IoT Reader may be a wireless communication device having a communication function with an Ambient IoT Device. The Ambient IoT Device may also be referred to as an Ambient IoT terminal, an IoT terminal, an LPWA terminal, or a Tag.

### Further variations

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

Moreover, it is noted that the loT device as described in any of the above embodiments and examples, may be integrated on an integrated circuit (IC). Moreover, the integration does not necessary include the entire transceiver. The transceiver is, in general, not necessarily a part of the loT device. The loT may be connected to an external antenna (module) connected to the loT device over a port on the loT device. Similar structure applies to the node.

Moreover, a computer program is provided including code instructions stored on a non-transitory medium, which when executed on one or more processor, causes the one or more processors to execute a method according to any of the above mentioned embodiments and examples.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (loT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, provided is an Internet of Things, IoT, device, comprising a transceiver which, in operation, receives a paging message indicating resource information regarding one or more resources, wherein the one or more resources are grouped in one or more resource sets in respective time slots and/or frequency units, and an entirety of the one or more resources of the one or more resource sets forms a resource pool; and receives a trigger message indicating that a resource set, from among the one or more resource sets, is scheduled to be made available for transmission; and circuitry which, in operation, randomly selects a first resource included in the resource pool as a resource for transmission of a paging response message; and controls the transceiver to transmit the paging response message in the first resource, if the first resource is included in the resource set corresponding to the trigger message.

In an embodiment, the resource information indicates at least one of a number of resources of the resource pool, a number of trigger messages to be expected, a number of resources of each of the one or more resource sets, a number of time slots of the one or more resource sets, and a number of frequency units of the one or more resource sets.

In an embodiment, the resource information indicates the one or more resource sets; and the circuitry, in operation, randomly selects the first resource from among all of the resources of the resource pool.

In an embodiment, the trigger message indicates an expected number of remaining resources of the resource pool; and the circuitry, in operation, determines whether or not an index of the first resource exceeds the expected number of remaining resources, and selects, from among the remaining resources of the resource pool, a second resource as the resource for transmission of the paging response message, using the expected number of remaining resources and the index of the first resource, if the index of the first resource exceeds the expected number of remaining resources.

In an embodiment, the trigger message indicates an expected number of remaining resources of the resource pool; and the circuitry, in operation, randomly selects the first resource from among the remaining resources of the resource pool.

For example, the resource information indicates a number of frequency units of the one or more resource sets; and the trigger message indicates a number of time slots of the resource set according to the trigger message.

For example, the circuitry, in operation, randomly selects the first resource by randomly selecting a frequency unit of the first resource before the trigger message is received and randomly selecting a time slot of the first resource after the trigger message is received.

For example, the resource information indicates a number of time slots of the one or more resource sets; and the trigger message indicates a number of frequency units of the resource set according to the trigger message.

For example, the circuitry, in operation, randomly selects the first resource by randomly selecting a time slot of the first resource before the trigger message is received and randomly selecting a frequency unit of the first resource after the trigger message is received.

In an embodiment, the resource information indicates a probability configuration involving a random value range and threshold value; and the circuitry, in operation, after reception of the trigger message, determines whether the first resource is to be randomly selected from resources included in the resource set according to the trigger message, using the probability configuration.

For example, the circuitry, in operation, generates a random value within the random value range; determines whether or not the random value exceeds the threshold value; and determines whether the first resource is to be randomly selected from resources included in the resource set according to the trigger message depending on whether or not the random value exceeds the threshold value.

In an embodiment, the resource information indicates the random value range and/or the threshold value.

In an embodiment, the trigger message indicates the random value range and/or the threshold value.

In an embodiment, the paging response message indicates a random identifier or an identifier associated with the loT device.

According to a second aspect, provided is a communication node, comprising circuitry which, in operation, determines resource information regarding one or more resources, wherein the one or more resources are grouped in one or more resource sets in respective time slots and/or frequency units, and an entirety of the one or more resources of the one or more resource sets forms a resource pool; and a transceiver which, in operation, transmits a paging message indicating the resource information; transmits a trigger message indicating that a resource set, from among the one or more resource sets, is scheduled to be made available for transmission; and receives a paging response message in a randomly selected first resource included in the resource pool.

In an embodiment, the resource information indicates at least one of a number of resources of the resource pool, a number of trigger messages to be expected, a number of resources of each of the one or more resource sets, a number of time slots of the one or more resource sets, and a number of frequency units of the one or more resource sets.

In an embodiment, the resource information indicates the one or more resource sets; and the first resource is a resource randomly selected from among all of the resources of the resource pool.

In an embodiment, the circuitry, in operation, determines an expected number of remaining resources of the resource pool; and the trigger message indicates the expected number of remaining resources of the resource pool.

In an embodiment, the circuitry, in operation, determines an expected number of remaining resources of the resource pool; the trigger message indicates the expected number of remaining resources of the resource pool; and the first resource is a resource randomly selected from among the remaining resources of the resource pool.

For example, the resource information indicates a number of frequency units of the one or more resource sets; and the trigger message indicates a number of time slots of the resource set according to the trigger message.

For example, the first resource is a resource randomly selected by randomly selecting a frequency unit of the first resource before the trigger message is transmitted and randomly selecting a time slot of the first resource after the trigger message is transmitted.

For example, the resource information indicates a number of time slots of the one or more resource sets; and the trigger message indicates a number of frequency units of the resource set according to the trigger message.

For example, the first resource is a resource randomly selected by randomly selecting a time slot of the first resource before the trigger message is transmitted and randomly selecting a frequency unit of the first resource after the trigger message is transmitted.

In an embodiment, the circuitry, in operation, determines a probability configuration involving a random value range and threshold value; the resource information indicates the probability information; and first resource is a resource randomly selected from resources included in the resource set according to the trigger message, using the probability configuration.

In an embodiment, the resource information indicates the random value range and/or the threshold value.

In an embodiment, the trigger message indicates the random value range and/or the threshold value.

In an embodiment, the paging response message indicates a random identifier or an identifier associated with the loT device.

According to a third aspect, provided is a method for an Internet of Things, loT, device, comprising receiving a paging message indicating resource information regarding one or more resources, wherein the one or more resources are grouped in one or more resource sets in respective in time slots and/or frequency units, and an entirety of the one or more resources of the one or more resource sets forms a resource pool; receiving a trigger message indicating that a resource set, from among the one or more resource sets, is scheduled to be made available for transmission; randomly selecting a first resource included in the resource pool as a resource for transmission of a paging response message; and transmitting the paging response message in the first resource, if the first resource is included in the resource set corresponding to the trigger message.

In an embodiment, the resource information indicates at least one of a number of resources of the resource pool, a number of trigger messages to be expected, a number of resources of each of the one or more resource sets, a number of time slots of the one or more resource sets, and a number of frequency units of the one or more resource sets.

In an embodiment, the resource information indicates the one or more resource sets; and the first resource is randomly selected from among all of the resources of the resource pool.

In an embodiment, the trigger message indicates an expected number of remaining resources of the resource pool; and the method comprises determining whether or not an index of the first resource exceeds the expected number of remaining resources, and randomly selecting, from among the remaining resources of the resource pool, a second resource as the resource for transmission of the paging response message, using the expected number of remaining resources and the index of the first resource, if the index of the first resource exceeds the expected number of remaining resources.

In an embodiment, the trigger message indicates an expected number of remaining resources of the resource pool; and the first resource is randomly selected from among the remaining resources of the resource pool.

For example, the resource information indicates a number of frequency units of the one or more resource sets; and the trigger message indicates a number of time slots of the resource set according to the trigger message.

For example, the first resource is randomly selected by randomly selecting a frequency unit of the first resource before the trigger message is received and randomly selecting a time slot of the first resource after the trigger message is received.

For example, the resource information indicates a number of time slots of the one or more resource sets; and the trigger message indicates a number of frequency units of the resource set according to the trigger message.

For example, the first resource is randomly selected by randomly selecting a time slot of the first resource before the trigger message is received and randomly selecting a frequency unit of the first resource after the trigger message is received.

In an embodiment, the resource information indicates a probability configuration involving a random value range and threshold value; and the method comprises, after reception of the trigger message, determining whether the first resource is to be randomly selected from resources included in the resource set according to the trigger message, using the probability configuration.

For example, the method comprises generating a random value within the random value range; determining whether or not the random value exceeds the threshold value; and determining whether the first resource is to be randomly selected from resources included in the resource set according to the trigger message depending on whether or not the random value exceeds the threshold value.

In an embodiment, the resource information indicates the random value range and/or the threshold value.

In an embodiment, the trigger message indicates the random value range and/or the threshold value.

In an embodiment, the paging response message indicates a random identifier or an identifier associated with the loT device.

According to a fourth aspect, provided is a method for a communication node, comprising determining resource information regarding one or more resources, wherein the one or more resources are grouped in one or more resource sets in respective time slots and/or frequency units, and an entirety of the one or more resources of the one or more resource sets forms a resource pool; transmitting a paging message indicating the resource information; transmitting a trigger message indicating that a resource set, from among the one or more resource sets, is scheduled to be made available for transmission; and receiving a paging response message in a randomly selected first resource included in the resource pool.

In an embodiment, the resource information indicates at least one of a number of resources of the resource pool, a number of trigger messages to be expected, a number of resources of each of the one or more resource sets, a number of time slots of the one or more resource sets, and a number of frequency units of the one or more resource sets.

In an embodiment, the resource information indicates the one or more resource sets; and the first resource is a resource randomly selected from among all of the resources of the resource pool.

In an embodiment, the method comprises determining an expected number of remaining resources of the resource pool; wherein the trigger message indicates the expected number of remaining resources of the resource pool.

In an embodiment, the method comprises determining an expected number of remaining resources of the resource pool; wherein the trigger message indicates the expected number of remaining resources of the resource pool; and the first resource is a resource randomly selected from among the remaining resources of the resource pool.

For example, the resource information indicates a number of frequency units of the one or more resource sets; and the trigger message indicates a number of time slots of the resource set according to the trigger message.

For example, the first resource is a resource randomly selected by randomly selecting a frequency unit of the first resource before the trigger message is transmitted and randomly selecting a time slot of the first resource after the trigger message is transmitted.

For example, the resource information indicates a number of time slots of the one or more resource sets; and the trigger message indicates a number of frequency units of the resource set according to the trigger message.

For example, the first resource is a resource randomly selected by randomly selecting a time slot of the first resource before the trigger message is transmitted and randomly selecting a frequency unit of the first resource after the trigger message is transmitted.

In an embodiment, the method comprises determining a probability configuration involving a random value range and threshold value; wherein the resource information indicates the probability information; and first resource is a resource randomly selected from resources included in the resource set according to the trigger message, using the probability configuration.

In an embodiment, the resource information indicates the random value range and/or the threshold value.

In an embodiment, the trigger message indicates the random value range and/or the threshold value.

In an embodiment, the paging response message indicates a random identifier or an identifier associated with the loT device.

According to a fifth aspect, provided is a non-transient computer-readable storage medium storing instructions, which, when executed by one or more computers, causes the one or more computers to perform any one of the methods described above.

According to a sixth aspect, provided is a computer program comprising instructions, which, when the program is executed by a computer, cause the computer to carry out the steps of any one of the methods described above.

## Claims

1. An Internet of Things, loT, device, comprising
a transceiver which, in operation,
receives a paging message indicating resource information regarding one or more resources, wherein
the one or more resources are grouped in one or more resource sets in respective time slots and/or frequency units, and
an entirety of the one or more resources of the one or more resource sets forms a resource pool; and
receives a trigger message indicating that a resource set, from among the one or more resource sets, is scheduled to be made available for transmission; and
circuitry which, in operation,
randomly selects a first resource included in the resource pool as a resource for transmission of a paging response message; and
controls the transceiver to transmit the paging response message in the first resource, if the first resource is included in the resource set corresponding to the trigger message.

2. The loT device according to claim 1, wherein
the resource information indicates at least one of a number of resources of the resource pool, a number of trigger messages to be expected, a number of resources of each of the one or more resource sets, a number of time slots of the one or more resource sets, and a number of frequency units of the one or more resource sets.

3. The loT device according to claim 1 or 2, wherein
the resource information indicates the one or more resource sets; and
the circuitry, in operation, randomly selects the first resource from among all of the resources of the resource pool.

4. The loT device according to and one of claims 1 to 3, wherein
the trigger message indicates an expected number of remaining resources of the resource pool; and
the circuitry, in operation,
determines whether or not an index of the first resource exceeds the expected number of remaining resources, and
selects, from among the remaining resources of the resource pool, a second resource as the resource for transmission of the paging response message, using the expected number of remaining resources and the index of the first resource, if the index of the first resource exceeds the expected number of remaining resources.

5. The loT device according to claim 1 or 2, wherein
the trigger message indicates an expected number of remaining resources of the resource pool; and
the circuitry, in operation, randomly selects the first resource from among the remaining resources of the resource pool.

6. The loT device according to claim 5, wherein
the resource information indicates a number of frequency units of the one or more resource sets; and
the trigger message indicates a number of time slots of the resource set according to the trigger message.

7. The loT device according to claim 6, wherein
the circuitry, in operation, randomly selects the first resource by randomly selecting a frequency unit of the first resource before the trigger message is received and randomly selecting a time slot of the first resource after the trigger message is received.

8. The loT device according to claim 5, wherein
the resource information indicates a number of time slots of the one or more resource sets; and
the trigger message indicates a number of frequency units of the resource set according to the trigger message.

9. The loT device according to claim 8, wherein
the circuitry, in operation, randomly selects the first resource by randomly selecting a time slot of the first resource before the trigger message is received and randomly selecting a frequency unit of the first resource after the trigger message is received.

10. The loT device according to claim 1, wherein
the resource information indicates a probability configuration involving a random value range and threshold value; and
the circuitry, in operation, after reception of the trigger message, determines whether the first resource is to be randomly selected from resources included in the resource set according to the trigger message, using the probability configuration.

11. The loT device according to claim 10, wherein
the circuitry, in operation,
generates a random value within the random value range;
determines whether or not the random value exceeds the threshold value; and
determines whether the first resource is to be randomly selected from resources included in the resource set according to the trigger message depending on whether or not the random value exceeds the threshold value.

12. The loT device according to claim 10 or 11, wherein
the resource information indicates the random value range and/or the threshold value.

13. The loT device according to any one of claims 10 to 12, wherein
the trigger message indicates the random value range and/or the threshold value.

14. The loT device according to any one of claims 1 to 13, wherein
the paging response message indicates a random identifier or an identifier associated with the loT device.

15. A method for an Internet of Things, IoT device, comprising
receiving a paging message indicating resource information regarding one or more resources, wherein
the one or more resources are grouped in one or more resource sets in respective in time slots and/or frequency units, and
an entirety of the one or more resources of the one or more resource sets forms a resource pool;
receiving a trigger message indicating that a resource set, from among the one or more resource sets, is scheduled to be made available for transmission;
randomly selecting a first resource included in the resource pool as a resource for transmission of a paging response message; and
transmitting the paging response message in the first resource, if the first resource is included in the resource set corresponding to the trigger message.
